# EUROPEAN PATENT APPLICATION

(11) **EP 3 825 986 A1**
(43) Date of publication of application: **26.05.2021**
(21) Application number: 20208948.8
(22) Date of filing: 20.11.2020
(51) Int. Cl.: G09B 19/22, G09B 19/00, G09B 5/02

(54) **A COMPUTER-IMPLEMENTED ADAPTIVE GAMEPLAY LEARNING SYSTEM AND A METHOD FOR ADAPTIVE GAMEPLAY LEARNING**

(30) Priority: 25.11.2019 US 201962939731 P
(71) Applicant: University of Tartu, 50090 Tartu (EE)
(72) Inventor: HOOSHYAR, Danial, 50090 Tartu (EE); PEDASTE, Margus, 50090 Tartu (EE); YANG, Yeongwook, 50090 Tartu (EE); FATHI, Moein, 50090 Tartu (EE)
(74) Representative: Berggren Oy

(57) **Abstract**

The invention relates to a computer-implemented adaptive gameplay learning system based on Bayesian Network model for providing personalized computational thinking learning. The system comprising: a gamified computational thinking (programming) environment, a graphical input command interface, a tiled game area containing movable characters, a plurality of computational thinking building blocks to be concurrently edited and executed within said computational thinking environment to provide commands, concept modules, skill modules, an embedded game activity assessment module monitoring learning advancement, wherein said Bayesian Network model is configured to generate a directed acyclic graph, said directed acyclic graph comprising logical nodes, wherein each concept module and skill module are associated to a logical node in the directed acyclic graph, and wherein a user provides sequence of commands arranging said plurality of computational thinking building blocks to produce effects in said gamified computational thinking environment and receiving a feedback from said activity assessment module. The invention further relates to a method of adaptive gameplay learning.

## Description

### Field of the invention

The invention relates to an adaptive computational thinking game in the academic world. The game offers adaptivity in both gameplay and feedback, hints, and tutorials.

### Background of the invention

There are several educational games that aim to foster students' computational thinking; however, they mostly focus on helping students gain theoretical concepts, such as sequence and conditional logic, as well as enhancing their learning motivation, while the provision of prompts to enhance students' computational thinking skills are generally ignored. One reason is that it is usually easier to promote and assess computational thinking concepts than computational thinking skills. This may result in unequal development of different aspects of computational thinking (less development of computational thinking skills), situating computational thinking development in a dilemma. Games that aim to teach computational thinking skills, on the other hand, should offer opportunities to practice the theoretical knowledge through gameplay. Hence, games that aim to teach applied knowledge and skills, must be differentiated from those that merely support reinforcing theoretical knowledge.

In addition, more importantly, the existing games mainly follow predefined and rigid computer-assisted instruction concepts, without incorporating personalization and adaptation in the games that would suit the individual needs of the player. Ignoring adaptivity, however, results in impeding the full educational potential of computer games.

### Summary

Taking into account the importance and relevance of computational thinking in a society, as well as the existing gaps in computational thinking game research, a new-adaptive educational computer game-based learning-system and method are provided to promote learners' computational thinking knowledge and skills.

According to a first aspect, there is provided a computer-implemented adaptive gameplay learning system based on Bayesian Network model for providing personalized computational thinking learning, the system comprising: a gamified programming environment, a graphical input command interface, a tiled game area comprising movable characters, a plurality of programming building blocks to be concurrently edited and executed within said programming environment to provide commands, concept modules, skill modules, an embedded game activity assessment module monitoring learning advancement, wherein said Bayesian Network model is configured to generate a directed acyclic graph, said directed acyclic graph comprising logical nodes, wherein each concept module and skill module are associated to a logical node in the directed acyclic graph, and arrane said plurality of programming building blocks to produce effects in said gamified programming environment and receiving a feedback from said activity assessment module based on a sequence of commands provided by a user.

According to an example, said concept modules are comprised of the learning group comprising sequence, conditional and loop. According to an example, said skill modules are comprised of the learning group comprising problem identification, problem decomposition, algorithm building, debugging, and simulation. According to an example, said embedded game activity assessment module is configured to assigns points according to the sequence of command and tile travelled in the game area. According to an example, each logical node i assumes a state condition ai with a specified conditional probability distribution. According to an example, said state condition ai of logical node i is connected to the parent set Pi of state condition for the node i by means of the conditional probability distribution p(a1 IPi), wherein ai is the state condition for the node i, Pi is the parent set of state condition for the need i, and the sum of P(ailPi) is 1.0 for each state condition configuration of Pi, and wherein the conditional probability distribution of a state condition ai for the node I is lower than a threshold value, said embedded game activity assessment module provides to the user multiple description of learning material by means of adaptive textual, graphical, and video tutorials.

According to a second aspect, there is provided a method of adaptive gameplay learning system according to the first aspect and its examples, wherein the method comprises: displaying a gamified computational thinking environment comprising a graphical input command interface and a tiled game area containing movable characters, recognizing input command received from the user in said gamified computational thinking environment by means of computational thinking building blocks, moving said movable characters in said tiled game area, assessing learning advancement of the user by means of an embedded game activity assessment module, and providing to the use multiple descriptions of learning material by means of adaptive textual, graphical, and video tutorials. According to an example, said computational thinking building blocks are configured for providing to the user input commands to learn computational thinking skills and concepts. According to an example, said computational thinking concepts are comprised of the learning groups comprising sequence, conditional and loop. According to an example, said computational thinking skills are comprised of the learning group comprising problem identification, problem decomposition, algorithm building, debugging and simulation. According to an example, said activity assessment module is based on a Bayesian Network model configured for generating a directed acyclic graph, said directed acyclic graph comprising logical nodes. According to an example, each computational thinking skill and concept is associated to a logical node in the directed acyclic graph. According to an example, each logical node in the directed acyclic graph assumes a state condition with an associated specified conditional probability distribution. According to an example, said multiple description of learning material is provided to the user on the base of the state condition of the logical node and the associated specified conditional portability distribution. According to an example, said state condition ai of logical node i is connected to the parent set Pi of state condition for the node i by means of the conditional probability distribution p(ailPi), wherein ai is a state condition for the node i, Pi is the parent set of state condition for the node i, and the sum of p(ailPi) is 1.0 for each state condition configuration of Pi.

### Brief description of the drawings

In the following, various embodiments of the invention will be described in more detail with reference to the appended drawings, in which
- Fig. 1: shows an example of AutoThinking;
- Fig. 2: shows an example of The DAG implemented in AutoThinking,
- Fig. 3a: shows an example of solution developed by a player, and
- Fig. 3b: shows an example of debugging of the developed solution with feedback and hints.

### Detailed description

This disclosre provides a key advantage of the 'intelligence' of the game wherein it decides when and how to behave with different students.

The system and method according to the prensent invention provide an advantage of the 'intelligence' of the game wherein it is decided when and how to behave with different students.

Computational Thinking (CT) is characterized as a cognitive ability enabling people to develop computational solutions for a current problem. It is also seen as a mental ability of applying computer science's reasoning processes to STEM (science, technology, engineering, and mathematic) domains, and further applying it to different problems and activities in everyday life. Moreover, the influence of CT has gone even beyond STEM, for instance in medicine, digital humanities, computational finance, archaeology, economics, etc. For these reasons-the fact that CT denotes a general and applicable problem-solving strategy for a wide range of domains-CT has been referred to it as one of the main and fundamental 21st century skills. Research has shown that teaching CT improve students' analytical skills and acquiring CT abilities could be seen as a factor of their academic success. Therefore, similar to numeracy and literacy, CT is recognized not only as an important competence for computer scientists, but for every person, which is why it should be taught and acquired in early education. To this end, it has frequently been reported by several studies that the integration of CT into curricula benefits both the cognitive and non-cognitive aspects of learning. Consequently, several reformations of educational programs have taken place on different educational levels all over the world in order to integrate CT into official curricula.

However, there exists some challenge in promoting computational thinking in educational practice. Research has shown pupils' negative attitudes toward learning CT, which in turn result in impeding its proper development. To overcome such challenges, different approaches have been applied in order to make CT more available and also engaging to learners. Educational computer games (henceforth referred to as educational games) may be one prospective solution. Educational games have gained researchers' attention as they have been shown to be effective learning tools that both engage and motivate students. In addition to that, findings from research suggest that educational games may also improve students' learning achievements. For example, the effectiveness of game-based learning on elementary students' academic achievement and motivation to learn science is studied. Findings indicated that students who learned through gameplay had significantly better academic achievement and motivation to learn science than those who learned with traditional approaches.

There are several educational games that aim to foster students' CT, such as CodeSpell; however, they mostly focus on helping students gain theoretical concepts, such as sequence and conditional logic, as well as enhancing their learning motivation, while the provision of prompts to enhance students' CT skills (e.g., pattern generalization and debugging) are generally ignored. One possible reason is that it is usually easier to promote and directly assess CT concepts than CT skills. This may result in unequal development of different aspects of CT (less development of CT skills), situating CT development in a dilemma. Games that aim to teach CT skills, on the other hand, should offer opportunities to practice the theoretical knowledge through gameplay. Hence, games that aim to teach applied knowledge and skills, and those that merely support reinforcing theoretical knowledge can be differentiated.

In addition, the existing games mainly follow predefined and rigid computer-assisted instruction concepts, without incorporating personalization and adaptation in the games that would suit the individual needs of the player. Ignoring adaptivity, however, results in impeding the full educational potential of computer games. Taking into account the importance and relevance of CT in society, as well as the existing gaps in CT game research, a new approach, an adaptive educational computer game-based learning, is provided to promote learners' CT knowledge and skills.

### AutoThinking

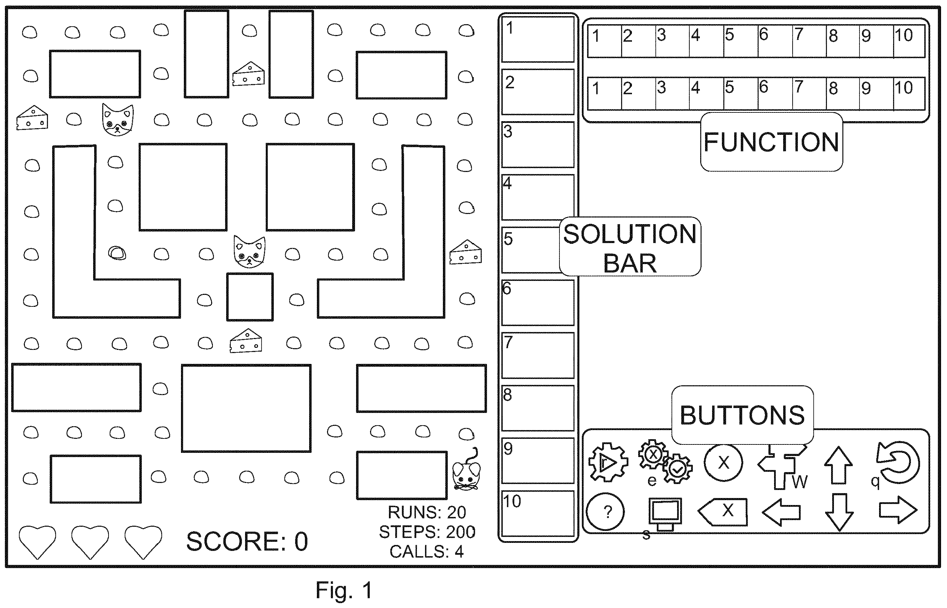

AutoThinking may be an intelligent and adaptive CT game that uses icons rather than text, code, or programming commands, thereby reducing the cognitive load by excluding the chances of syntactical errors. It has been developed using Python and is the first adaptive CT game in the academic world, to the best of our knowledge. It teaches three central CT concepts (sequence, conditional, and loop) and four skills (problem identification and decomposition, algorithm building, debugging, and simulation) within an adaptive environment shown in Fig. 1. AutoThinking seeks to promote CT skills and concepts through fun and personalized gameplay within a large state space. Its design reflects the fact that CT skills of debugging and distributed computation are natural to digital board games, and thus promotes the typical CT transfer of implicit knowledge about game rules into formal logic. Needless to mention that its current design also promotes better spatial reasoning ability of players as it is categorized as board games. The current design of AutoThinking may also expand to future levels of difficulty through randomization and probability.

AutoThinking may consist of three levels in which a player should, in the role of a mouse, develop different types of strategies and solutions to complete the levels, while collecting as many cheese pieces and scoring as much as possible, and at the same time escaping from two cats in the maze (see Table 1 for description of the three levels of the game). Players may develop up to 20 solutions for clearing all 76 cheese pieces in the maze. During the gameplay, the player receives more points for solutions that involve various CT concepts or skills, and for traversing non-empty tiles. Note that the player is provided with various options to develop different types of solutions; for example, it is possible to use "function" to save various patterns and apply or generalize them in different situations of the game. According to the suitability of the solution for the current state of the maze, the player is adaptively given various types of feedback (textual, graphical, or video) and hints.

Below is shown a table 1 indicating description of the three different levels of AutoThinking.

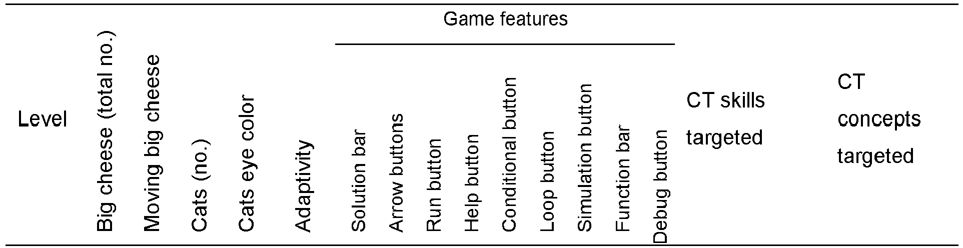

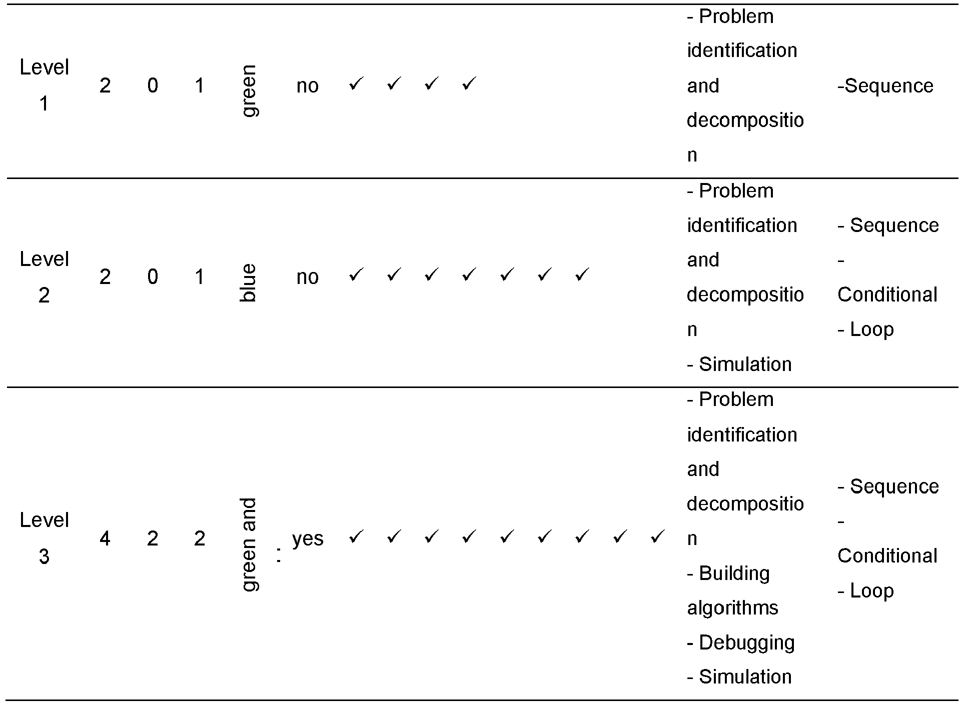

Several activities and features in the AutoThinking game are designed and embedded to target and promote different CT skills and concepts. A "solution bar" is created in order to help the player develop different solutions for different situations of the maze using sequence of proper actions (targeting both problem-solving and sequence). "Function" is designed to encourage the player to construct generalizable patterns where they may be used in different situations of the game (targeting algorithmic thinking and pattern recognition skill). The "loop" button helps run the same sequence of actions multiple times (practicing the loop concept). The "conditional" button enables the player to decide based on certain conditions that support the result of multiple outcomes (practicing conditional concept). The "debug" button enables the player to monitor the solution algorithm and possibly detect and solve any potential errors in its logic (practicing debugging skill). And finally, the "simulation" button allows the players to simulate their solution before executing it in order to observe the outcome of their solution regardless of intervention of other variables in the game, such as the cats' movements and cheese pieces (practicing run time mode or simulation skill).

### General Rules and Features

**Mouse, Cats, and Cheeses.** The player (mouse) must avoid randomly and/or intelligently moving cats to eat the cheeses. The green-eyed cat, in all three levels of AutoThinking, moves randomly WITH repetition, according to the commands placed by players in the solution bar (10 vertical empty slots where player may develop their own solution algorithm to move the mouse). However, the blue-eyed cat, in level two of AutoThinking, moves randomly WITHOUT repetition, according to the number of tiles traversed by the mouse. If, for instance, a 3-command solution led to the mouse moving 10 tiles, the green cat would move 3 tiles at random while the blue cat would randomly move 10 tiles without repetition. What is more, the blue-eyed cat, in level three of AutoThinking, moves intelligently with or without repetition, according to both the number of tiles traversed by the mouse and player's skills (it switches between four algorithms based on player's ability). At the same time, all small cheeses and two big cheeses stay fixed until eaten, but two additional big cheeses move at random.

**Buttons.** Using keyboard or mouse, players may develop their solution. For example, "Q" and "W' represent "loop" and "conditional", respectively; F1-F2 save your solution/strategy in the 10 horizontal empty slots as a "function" that player may recall and re-use the patterns using digit 1-2, while arrow keys indicate directions. Simulation, debug, run, and help buttons also assist players to simulate (while showing two different pointing systems for their solution: technical skills and cheese scores), debug, and run their solution, as well as have additional guidance and information on the game.

**Points.** Solutions may earn up to 50 points, aside from cheese points, based on tiles travelled and the fittingness of the commands according to the situations. In other words, pointing system is associated with players skills and solutions. Small cheese is worth 10 points, big cheese 500, and being caught by a cat costs a life and -500 points. Moreover, travelling empty path (without cheese) or going to a wall may cause loss of points according to situation of the maze and the suitability of solution.

**Simulation.** Players are able to simulate their solution by witnessing the mouse's movements during run-time while both cats remain fixed, which is a mechanism for running the same sequence multiple times.

**Debug.** AutoThinking uses a probabilistic approach for players' skill assessments. This real-time decision making algorithm equips AutoThinking with various interactive and adaptive options to teach debugging skill which has always been pointed out as an essential component of both CT and programming. Thus, players may monitor their solution to detect any potential logic errors through real-time adaptive and interactive hints, feedbacks, and intervention (e.g., tutorials which aim to support debugging skills and other CT skills). It thus encourages students to think critically about their solutions.

**Run.** Unlike the Debug button which provide players with different real-time adaptive features (to improve their CT skills and concepts) before execution of their solution, Run button offers different real-time adaptive features after execution of their solution, adaptively cuing players to learn skills and concepts according to their abilities. This way, AutoThinking shoots various type of real-time adaptive and interactive hints, feedbacks, and tutorials (different forms: textual, graphical, or video) in different situations to support players in learning CT concepts and skills. By integrating such features into gameplay, AutoThinking prompts players to work with the interventions to realize the game's learning outcomes.

### Bayesian Network in AutoThinking

In order to adapt gameplay in real time and offer personalized learning according to players' skills, using Bayesian Network (BN), a continuous non-invasive assessment has been employed. This embedded assessment connects observable game activity with a learning outcome and performs updates to the player model, thereby monitoring and advancing learning through adaptive visualized features (e.g., hints, feedbacks, and etc.), and tailor learning tutorials. It also uses the player assessment to bring adaptivity within gameplay by directing the cat (non-player character) to a specific zone on the game according to players' ability.

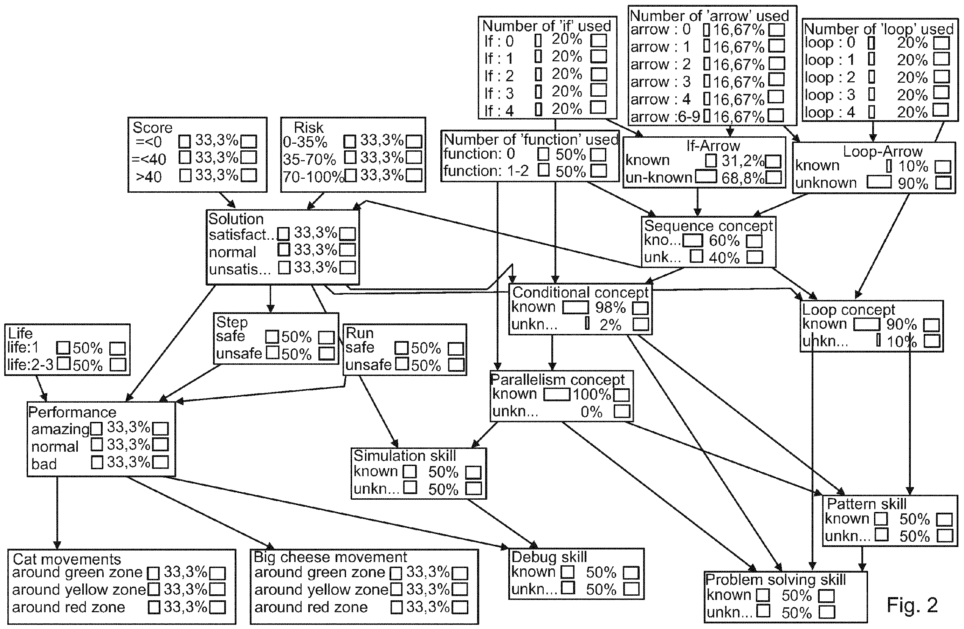

**Problem Domain Modelling.** AutoThinking stores various information within gameplay sessions, such as players' actions (particularly, the commands used to develop a solution), situation on the board (mouse, cats, and cheeses), score, step, life, and several more. Those information may be captured in the BN model (see Fig. 2), where the model entails directed acyclic graph (DAG) and a corresponding set of conditional probability distributions (CPDs).

After identification of a set of CT concepts and skills the DAG developed the DAG, where each concept and skill is represented by a node in the graph. If knowledge of a concept is a prerequisite for understanding another, a directed edge were added from the former to the latter. For example, to promote in Problem solving skill (which is one of computational thinking skills), it may first be understanded the concepts of Conditional and Loop, and Pattern skill. Fig. 2 depicts the DAG implemented in AutoThinking.

The next task in development of the BN is to specify a CPD for each node given its parents. For variable *a*ᵢ with parent set *P*ᵢ, a CPD *p*(*a*ᵢ|*P*ᵢ) has the property that for each configuration (instantiation) of the variables in *P*ᵢ, the sum of the probabilities of *a*ᵢ is 1.0.

Similar to the construction of DAG, CPDs for the DAG is developed. In designing the BN, relationships between CT concepts and skills were taken into account, and all game activities (i.e. suitability of solution built by the player for moving the mouse through the maze while eating cheese, escaping cats, and collecting points - considering random movement of both cats within the large state space, number of existing life, runs, and functions, scores, and etc.). Finally, using the BN model developed for AutoThinking, the probability of each concept and the prerequisite concepts is calculated (for more details, see Hooshyar, Lim, Pedaste, Yang, Fathi, and Yang (2019 December). AutoThinking: An adaptive computational thinking game. In International Conference on Innovative Technologies and Learning (pp. 381-391). Springer, Cham.).

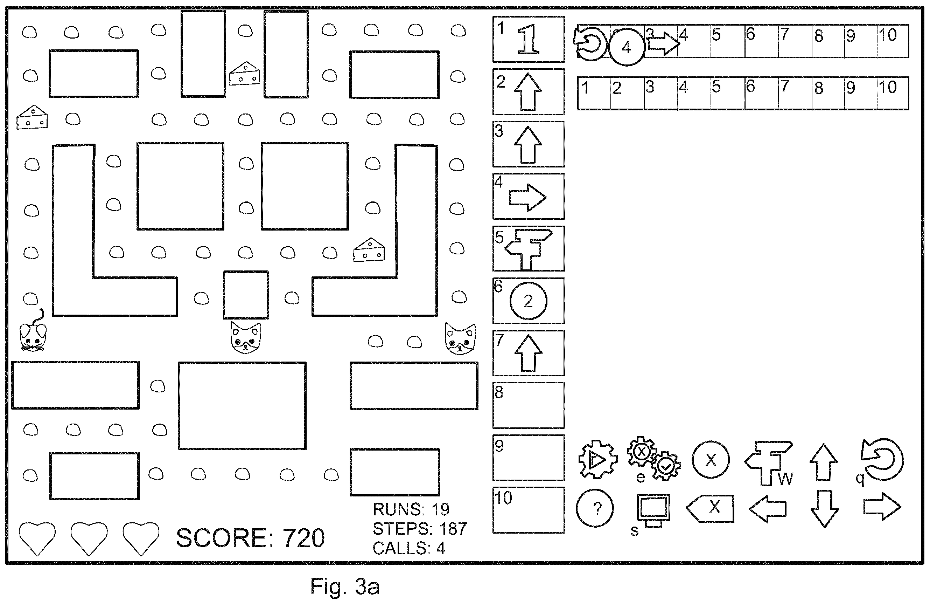

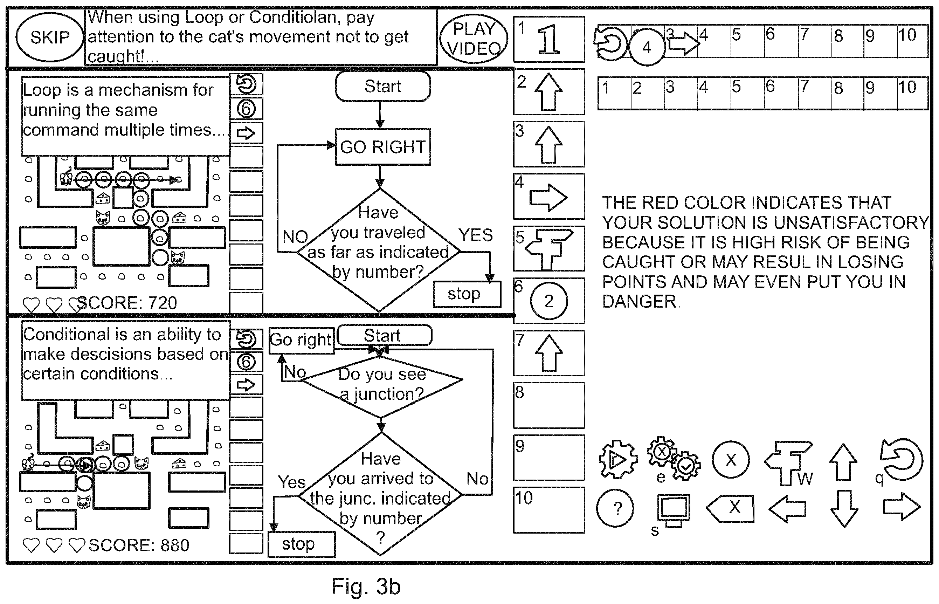

**Adaptivity in learning.** While playing the game, the automatic short- and long-term assessment of the players enables the game to provide them with timely feedback and hints. Observe that the short-term assessment is based on the current solution developed by a player, whereas the long-term assessment considers all previous solutions developed by the player. According to the current state of the maze and the player's skill level (long- and short-term), the game offers textual, graphical, or video feedback about CT concepts and skills that are embedded in the gameplay. It also highlights some of the game features or buttons as hints, enabling players to improve their solutions according to both the hints and the feedback. For instance, Fig. 3a illustrates a solution developed by a player, and Fig. 3b shows feedback and hints generated after clicking on the "debug" button for that specific situation of the game. Apart from the feedback and hints, whether the player opts to run the solution or to revise, the cat movement will be regulated by switching between the four algorithms explained in the following sub-section (i.e., random, provocative, aggressive, and lenient).

This phase of adaptivity takes place at two different times, before or after running the solution. Regarding the former, once players have developed their solution they may use the "debug" button-which activates the probabilistic model used for decision-making-to see the estimation of the suitability of their solution in the form of timely adaptive feedback or hints. More explicitly, if the developed solution is estimated as satisfactory, players receive feedback indicating that their solution is a successful one and they may continue; otherwise they may receive another type of feedback guiding them to think about revising their solution before running it. Doing so provides the player with a chance to change and improve their solution so as to have a more optimum solution. Alternatively, concerning the latter situation, the player may skip using the "debug" option and directly "run" the game (after developing the solution). This results in timely adaptive feedback or hints, after running the game, which would help the player to know about the shortcomings and mistakes in previous solutions and possible ways to overcome them. Such adaptivity-which aims to foster both learners' problem-solving (algorithmic thinking) and pattern recognition skills-individually supports learners in developing the most optimum solution for the problem in hand.

**Adaptivity in gameplay.** During gameplay, one of the cats moves intelligently according to the quality of the developed solution by the player. To do so, it considers whether the solution has the potential to gain a high enough score, whether it is risky in terms of the mouse getting caught by cats, and if players used proper CT skills or concepts in their developed solution according to the current state of the maze. Accordingly, a decision-making technique used in the game-provided by a probabilistic model, Bayesian Network, that automatically assesses players' skills-regulates the movement of the cat by switching between the following algorithms:
- Random: the cat decides to move randomly without iteration through the maze
- Provocative: the cat decides to move provocatively by going close to the mouse (up to one tile away), not to catch it, and come back
- Aggressive: the cat decides to move aggressively with the aim of catching the mouse (by finding the shortest distance from the mouse)
- Lenient: the cat decides not to get closer than six tiles away from the mouse

Note that the cat decides to choose a more appropriate algorithm to use for its movements according to both the short-term and long-term solutions of the player. In other words, it considers both the current developed solution as well as previous solutions developed by the player. More explicitly, if a player underperforms in loop logic in several previous episodes of the game and in the current episode performs highly, the decision-making algorithm would probably calculate a lower probability for his/her loop logic competency (and accordingly for other competencies) than those players that performed highly both in the previous and current episodes of the game. However, another cat still moves at random with repetition based on the number of commands placed in the solution bar, making AutoThinking an unpredictable game that always provides the player with a new situation that might not have been faced by previous players.

The adaptive computational thinking game called AutoThinking benefits from a non-invasive assesment which builds and update a cognitive model of each player, provided by a probabilistic models presented as a Byesian networks. AutoThinking seeks to engage players through personalized and fun game play while offering timely cognitive pedagogical supprot, like hits, feedbacks, and tutorial. Such assesment serves as double purpose of: (1) adaptively providing multiple description of learning materials (by offering adaptive textual, graphical, and video tutorials), similar to the natural way that teachers use in classroom, and (2) creatively integrating adaptivity within gameplay by directing the cat (non-player character) to a specific zone on the game according to players' ability.

The various embodiments of the invention can be implemented with the help of computer program code that resides in a memory and causes an apparatus to carry out the invention. For example, the apparatus that is a computing device, for example, a personal compurter or laptop or a computer-implemented adaptive gameplay learning system may comprise circuitry and electronics for analysing, receiving and transmitting data, a computer program code in a memory, and a processor which, when running the computer program code, causes the apparatus and/or system to carry out the features of an example embodiment. The processor, when running the computer program code may carry out all the steps of the following method: displaying a gamified computational thinking environment comprising a graphical input command interface and a tiled game area containing movable characters, recognizing input command received from the user in said gamified computational thinking environment by means of computational thinking building blocks, moving said movable characters in said tiled game area, assessing learning advancement of the user by means of an embedded game activity assessment module, and providing to the use multiple descriptions of learning material by means of adaptive textual, graphical, and video tutorials.

It is obvious that the present invention is not limited solely to the above-presented embodiments, but it can be modified within the scope of the appended claims.

## Claims

1. A computer-implemented adaptive gameplay learning system based on Bayesian Network model for providing personalized computational thinking learning, the system comprising:
a gamified computational thinking (programming) environment,
a graphical input command interface,
a tiled game area containing movable characters,
a plurality of computational thinking building blocks to be concurrently edited and executed within said computational thinking environment to provide commands,
concept modules,
skill modules,
an embedded game activity assessment module monitoring learning advancement,
wherein said Bayesian Network model is configured to generate a directed acyclic graph, said directed acyclic graph comprising logical nodes,
wherein each concept module and skill module are associated to a logical node in the directed acyclic graph, and
arrange said plurality of computational thinking building blocks to produce effects in said gamified computational thinking environment and receive a feedback from said activity assessment module based on a sequence of commands provided by a user.

2. The computer-implemented adaptive gameplay learning system according to claim 1, wherein said concept modules comprise the learning group comprising sequence, conditional and loop.

3. The computer-implemented adaptive gameplay learning system according to claim 1, wherein said skill modules comprise the learning group comprising problem identification, problem decomposition, algorithm building, debugging, and simulation.

4. The computer-implemented adaptive gameplay learning system according to claim 1, wherein said embedded game activity assessment module is configured to assign points according to the sequence of command and tile travelled in the game area.

5. The computer-implemented adaptive gameplay learning system according to any of claims 1 to 4, wherein each logical node ***i*** assumes a state condition ***aᵢ*** with a specified conditional probability distribution.

6. The computer-implemented adaptive gameplay learning system according to claim 5, wherein said state condition ***aᵢ*** of logical node ***i*** is connected to the parent set ***Pi*** of state condition for the node ***i*** by means of the conditional probability distribution ***p(aᵢ*|*Pᵢ)***, wherein
***aᵢ*** is the state condition for the node ***i*,**
***Pi*** is the parent set of state condition for the need ***i**,* and
the sum of P(ailPi) is 1.0 for each state condition configuration of Pi, and wherein the conditional probability distribution of a state condition ai for the node I is lower than a threshold value, said embedded game activity assessment module provides to the user multiple description of learning material by means of adaptive textual, graphical, and video tutorials.

7. A method of adaptive gameplay learning configured to perform by a system according to any of the claims 1 to 6, wherein the method comprises:
- displaying a gamified computational thinking environment comprising a graphical input command interface and a tiled game area containing movable characters,
- recognizing input command received from the user in said gamified computational thinking environment by means of computational thinking building blocks,
- moving said movable characters in said tiled game area,
- assessing learning advancement of the user by means of an embedded game activity assessment module, and
- providing to the use multiple descriptions of learning material by means of adaptive textual, graphical, and video tutorials.

8. The method of adaptive gameplay learning according to claim 7, wherein said computational thinking building blocks are configured for providing to the user input commands to learn computational thinking skills and concepts.

9. The method of adaptive gameplay learning according to claim 7, wherein said computational thinking concepts are comprised of the learning groups comprising sequence, conditional and loop.

10. The method of adaptive gameplay learning according to claim 9, wherein said computational thinking skills are comprised of the learning group comprising problem identification, problem decomposition, algorithm building, debugging and simulation.

11. The method of adaptive gameplay learning according to claim 7, wherein said activity assessment module is based on a Bayesian Network model configured for generating a directed acyclic graph, said directed acyclic graph comprising logical nodes.

12. The method of adaptive gameplay learning according to claim 11, wherein each computational thinking skill and concept is associated to a logical node in the directed acyclic graph.

13. The method of adaptive gameplay learning according to claim 12, wherein each logical node in the directed acyclic graph assumes a state condition with an associated specified conditional probability distribution.

14. The method of adaptive gameplay learning according to any of claims 8 to 13, wherein said multiple description of learning material is provided to the user on the base of the state condition of the logical node and the associated specified conditional portability distribution.

15. The method of adaptive gameplay learning according to any of 7 to 14,
wherein said state condition ***ai*** of logical node ***i*** is connected to the parent set ***Pi*** of state condition for the node ***i*** by means of the conditional probability distribution ***p(ai*|*Pi)***,wherein
***ai*** is a state condition for the node ***i*,**
***Pi*** is the parent set of state condition for the node ***i**,* and
the sum of ***p(ai*|*Pi)*** is 1.0 for each state condition configuration of ***Pi.***
